(19) Europäisches Patentamt
European Patent Office
Office européen des brevets

(11) **EP 3 408 155 B1**

(12) **EUROPÄISCHE PATENTSCHRIFT**

(45) Veröffentlichungstag und Bekanntmachung des Hinweises auf die Patenterteilung:
**23.09.2020   Patentblatt 2020/39**

(21) Anmeldenummer: **17708730.1**

(22) Anmeldetag: **01.03.2017**

(51) Int Cl.:
*B61D 17/04* (2006.01)    *B60R 13/00* (2006.01)

(86) Internationale Anmeldenummer:
**PCT/EP2017/054699**

(87) Internationale Veröffentlichungsnummer:
**WO 2017/167524 (05.10.2017 Gazette 2017/40)**

(54) **VERKLEIDUNGSMODULE FÜR FAHRZEUGE INSBESONDERE SCHIENENFAHRZEUGE**

CLADDING MODULE FOR VEHICLES, IN PARTICULAR RAIL VEHICLES

MODULE D'HABILLAGE POUR VÉHICULES, EN PARTICULIER POUR VÉHICULES FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2016   DE 102016205379**

(43) Veröffentlichungstag der Anmeldung:
**05.12.2018   Patentblatt 2018/49**

(73) Patentinhaber: **Siemens Mobility GmbH**
**81739 München (DE)**

(72) Erfinder:
• **ALOFS, Ludger**
**47829 Krefeld (DE)**
• **BELZER, Reinhold**
**91325 Adelsdorf (DE)**
• **BIADATZ, Adrian**
**47804 Krefeld (DE)**
• **DOMBROWSKY, Martin**
**50859 Köln (DE)**
• **HESTERBERG, Joshua**
**40822 Mettmann (DE)**
• **KIESEL, Michael**
**95816 sacramento (US)**
• **KIRCHHOFF, Sascha**
**47799 Krefeld (DE)**
• **SCHWOZER, Mirko**
**91315 Höchstadt (DE)**
• **TREUTLER, Helmut**
**47804 Krefeld (DE)**
• **WOLF, Günter**
**90425 Nürnberg (DE)**

(56) Entgegenhaltungen:
EP-A1- 2 524 856    EP-A2- 1 749 733
GB-A- 2 515 647    US-A- 3 188 131
US-A- 4 283 086    US-A1- 2005 161 975
US-A1- 2011 017 527

EP 3 408 155 B1

**Beschreibung**

Die Erfindung bezieht sich auf Fahrzeuge, insbesondere Schienenfahrzeuge, die mit Verkleidungsmodulen verkleidet sind.

Ein Fahrzeug nach dem Oberbegriff des Anspruchs 1 ist beispielsweise aus der US 4,283,086 bekannt.

Der Innenausbau heutiger Reisezüge erfolgt bezüglich der Anordnung und Ausgestaltung von Sitzplätzen, des Gepäckvolumens sowie der Raumtrennungen im Fahrzeuginnenraum in erster Linie mit Blick auf die Kundenanforderungen. Die erforderliche Anzahl an unterschiedlichen Innenverkleidungsbauteilen ist dabei heutzutage insbesondere wegen der individuellen Raumtrennung im Fahrzeuginnenraum bzw. wegen der variablen Anordnung von Raumtrennermodulen erheblich, so dass der Aufwand und die Kosten im Zusammenhang mit der Fahrzeuginnenraumverkleidung allein wegen der Individualität der Raumtrennung erheblich sein können.

Der Erfindung liegt demgemäß die Aufgabe zugrunde, ein Fahrzeug, insbesondere Schienenfahrzeug, anzugeben, das sich besonders aufwands- und kostenarm herstellen lässt.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass die Verkleidungsmodule sowohl Seitenwandmodule als auch Gepäckablagemodule und/oder Seitendeckenmodule umfassen, wobei über den Seitenwandmodulen jeweils ein Gepäckablagemodul und/oder ein Seitendeckenmodul montiert ist, die Seitenwandmodule, Gepäckablagemodule und Seitendeckenmodule jeweils teilweise eine erste Breite und teilweise eine zweite Breite, die kleiner als die erste Breite ist, aufweisen, wobei ferner die Breitendifferenz zwischen der ersten und zweiten Breite der halben Breite zumindest eines im Fahrzeug montierten Raumtrennermoduls entspricht, das zwischen zwei der Gepäckablagemodule und/oder Seitendeckenmodule der zweiten Breite montiert ist und an der Schnittstelle zwischen zwei unmittelbar aneinander angrenzenden Seitenwandmodulen der ersten Breite angeordnet ist.

Insbesondere kann das Raumtrennermodul in Fahrzeugquerrichtung gesehen vor die Schnittstelle gesetzt sein und diese verdecken.

Ein wesentlicher Vorteil des erfindungsgemäßen Fahrzeugs besteht darin, dass die Verkleidungsmodule bezüglich ihrer Breite gezielt mit Blick auf die oben beschriebene Raumtrennungsproblematik standardisiert sind. Durch die Anpassung der ersten und zweiten Breite an die Breite der Raumtrennermodule lässt sich gewährleisten, dass eine Verkleidung stets mit Verkleidungsmodulen der ersten und/oder zweiten Breite möglich ist, und zwar unabhängig davon, ob Raumtrennermodule in dem jeweils zu verkleidenden Fahrzeugabschnitt vorhanden sind oder nicht bzw. an welchen Stellen Raumtrennermodule vorgesehen werden.

Vorteilhaft ist es, wenn die überwiegende Anzahl der Raumtrennermodule, vorzugsweise alle Raumtrennermodule, dieselbe Breite, nachfolgend Raumtrennermodulbreite genannt, aufweisen.

In mit einem Raumtrenner ausgestatteten Abschnitten des Fahrzeugs ist es vorteilhaft, wenn die Raumtrennermodule oder zumindest die überwiegende Anzahl an Raumtrennermodulen jeweils räumlich - in Fahrzeugquerrichtung von innen nach außen gesehen - vor der Schnittstelle zwischen zwei unmittelbar benachbarten Seitenwandmodulen der ersten Breite angeordnet sind und die Schnittstelle verdecken und die über diesen zwei benachbarten Seitenwandmodulen befindlichen Gepäckablagemodule und/oder Seitendeckenmodule jeweils die zweite Breite aufweisen.

Die Fahrzeugdecke ist vorzugsweise - ausschließlich oder zumindest überwiegend - mit solchen Deckenmodulen, insbesondere Lochdeckenmodulen verkleidet, deren Modulbreite einer der folgenden Breiten entspricht:

- der oben genannten ersten Breite,
- der oben genannten zweiten Breite,
- einer dritten Breite, die der Hälfte der Differenz zwischen der ersten Breite und der Raumtrennermodulbreite entspricht, oder
- einer vierten Breite, die der ersten Breite abzüglich der Hälfte der Differenz zwischen der ersten und zweiten Breite entspricht.

Bezüglich der Deckenverkleidung ist es besonders vorteilhaft, wenn alle Deckenmodule mit der ersten Breite oder zumindest die überwiegende Anzahl an Deckenmodulen mit der ersten Breite mittig über der Schnittstelle zwischen zwei benachbarten, die ersten Breite aufweisenden Seitenwandmodulen angeordnet sind, alle Deckenmodule mit der zweiten Breite oder zumindest die überwiegende Anzahl an Deckenmodulen mit der zweiten Breite mittig über der Schnittstelle zwischen zwei benachbarten, die zweite Breite aufweisenden Seitenwandmodulen angeordnet sind, alle Deckenmodule mit der dritten Breite oder zumindest die überwiegende Anzahl an Deckenmodulen mit der dritten Breite jeweils paarweise angeordnet sind, wobei jedes Paar jeweils ein Raumtrennermodul oder ein Monitormodul zwischen sich einschließt und jedes Paar mittig über der Schnittstelle zwischen zwei benachbarten, die ersten Breite aufweisenden Seitenwandmodulen angeordnet ist, und alle Deckenmodule mit der vierten Breite oder zumindest die überwiegende Anzahl an Deckenmodulen mit der vierten Breite mittig über der Schnittstelle zwischen einem die erste Breite aufweisenden Seitenwandmodul und einem benachbarten, die zweite Breite aufweisenden Seitenwandmodul angeordnet sind.

Die Raumtrennermodule, die Monitormodule und/oder die Deckenmodule sind vorzugsweise an einem sich in Längsrichtung durch das Fahrzeug hindurcherstreckenden, im Dachbereich montierten oder im Dachbereich integrierten Deckengerüst montiert, insbesondere daran angehängt.

An dem oder zumindest an einem sich in Längsrichtung durch das Fahrzeug hindurcherstreckenden, im Dachbereich montierten oder im Dachbereich integrierten Deckengerüst sind vorzugsweise Innendeckencontainer montiert, wobei jeder Innendeckencontainer jeweils einem Deckenmodul zugeordnet ist und jeweils an dergleichen Stelle - in Fahrzeuglängsrichtung gesehen - wie das zugeordnete Deckenmodul montiert ist und die Breite der Innendeckencontainer jeweils mit der Breite des zugeordneten Deckenmoduls identisch ist.

Das Deckengerüst ist bevorzugt durch ein Profil oder eine Profilstruktur, insbesondere ein Strangpressprofil oder eine Strangpressprofilstruktur, gebildet.

Bezüglich der Raumtrennermodule wird es als vorteilhaft angesehen, wenn die überwiegende Anzahl an denjenigen Raumtrennermodulen, die Innentürmodule sind, oder alle Raumtrennermodule, die Innentürmodule sind - in Fahrzeugquerrichtung gesehen - breiter als die im Modulinneren von einer Türhalteeinrichtung gehaltene Innentür ist und die im Modulinneren angeordnete Türhalteeinrichtung derart ausgestaltet ist, dass im Rahmen der Innentürmontage ein Verschieben der Innentür in Fahrzeuglängsrichtung innerhalb des Innentürmoduls - ohne Verschieben des Innentürmoduls als solches - möglich ist.

Vorteilhaft ist es beispielsweise, wenn die Türhalteeinrichtung an dem im Dachbereich montierten oder im Dachbereich integrierten Deckengerüst montiert ist und die Innentür, vorzugsweise einschließlich Türantrieb, in Fahrzeuglängsrichtung an dem Deckengerüst verschiebbar ist.

Die überwiegende Anzahl im Sinne der obigen Erläuterungen beträgt vorzugsweise mindestens 50% der jeweiligen Bezugsgröße bzw. Bezugszahl, bevorzugt mindestens 75 % und besonders bevorzugt mindestens 90 %.

Die Erfindung bezieht sich darüber hinaus auf ein Set an Verkleidungsmodulen, das zum Verkleiden einer rohbauseitigen Fahrzeugseitenwand und/oder einer rohbauseitigen Fahrzeugdecke geeignet ist. Erfindungsgemäß ist bezüglich eines solchen Sets vorgesehen, dass das Set Verkleidungsmodule einer ersten Breite und einer zweiten Breite, die kleiner als die erste Breite ist, aufweist, wobei die Breitendifferenz zwischen der ersten und zweiten Breite der halben Breite zumindest eines Raumtrennermoduls entspricht, das zwischen zwei der Verkleidungsmodule montierbar ist oder an der Schnittstelle zwischen zwei unmittelbar aneinander angrenzenden Verkleidungsmodulen angeordnet sein kann, insbesondere in Fahrzeugquerrichtung gesehen vor die Schnittstelle gesetzt sein kann und diese verdecken kann.

Bezüglich der Vorteile des erfindungsgemäßen Sets sei auf die obigen Ausführungen im Zusammenhang mit den Vorteilen des erfindungsgemäßen Fahrzeugs verwiesen.

Die Erfindung wird nachfolgend anhand von Ausführungsbeispielen näher erläutert; dabei zeigen beispielhaft

Figur 1    ein Ausführungsbeispiel für ein Set an Verkleidungsmodulen, mit denen sich eine rohbauseitige Fahrzeugseitenwand und eine rohbauseitige Fahrzeugdecke verkleiden lassen,

Figur 2    einen Abschnitt eines Ausführungsbeispiels für ein Schienenfahrzeug, das mit Verkleidungsmodulen aus dem Set an Verkleidungsmodulen gemäß Figur 1 verkleidet ist,

Figur 3    einen anderen verkleideten Abschnitt des Schienenfahrzeugs gemäß Figur 2,

Figur 4    näher im Detail ein Ausführungsbeispiel für ein Innentürmodul, das bei dem Schienenfahrzeug gemäß den Figuren 2 und 3 als Raumtrennermodul eingesetzt werden kann, und

Figur 5    ein Ausführungsbeispiel für die Verkleidung eines Schienenfahrzeugs, bei dem zusätzlich Innendeckencontainer vorhanden sind.

In den Figuren werden der Übersicht halber für identische oder vergleichbare Komponenten stets dieselben Bezugszeichen verwendet.

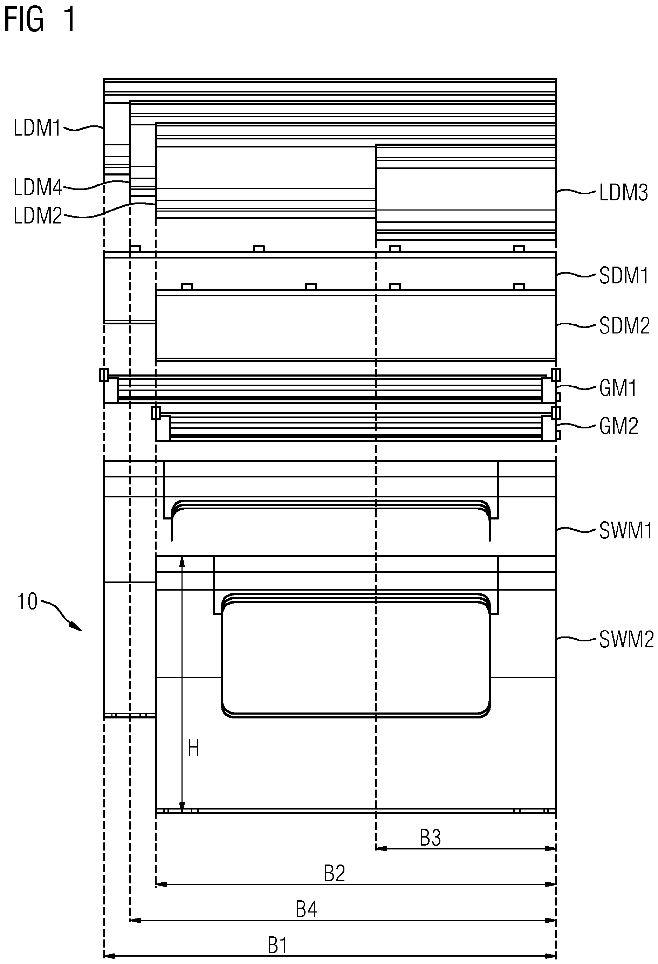

Die Figur 1 zeigt ein Ausführungsbeispiel für ein Set 10 an Verkleidungsmodulen, die zum innenseitigen Verkleiden eines Fahrzeugs geeignet sind.

Das Set 10 umfasst Seitenwandmodule SWM1, die eine erste Breite B1 und eine Höhe H aufweisen. Die Dicke der Seitenwandmodule SWM1 erstreckt sich in die Bildebene in Figur 1 hinein.

Das Set 10 umfasst außerdem Gepäckablagemodule GM1 und Seitendeckenmodule SDM 1, die ebenfalls jeweils die vorgegebene erste Breite B1 aufweisen.

In dem Set 10 sind außerdem Seitenwandmodule SWM2, Gepäckablagemodule GM2 sowie Seitendeckenmodule SDM2 vorhanden, die jeweils eine vorgegebene zweite Breite B2 aufweisen.

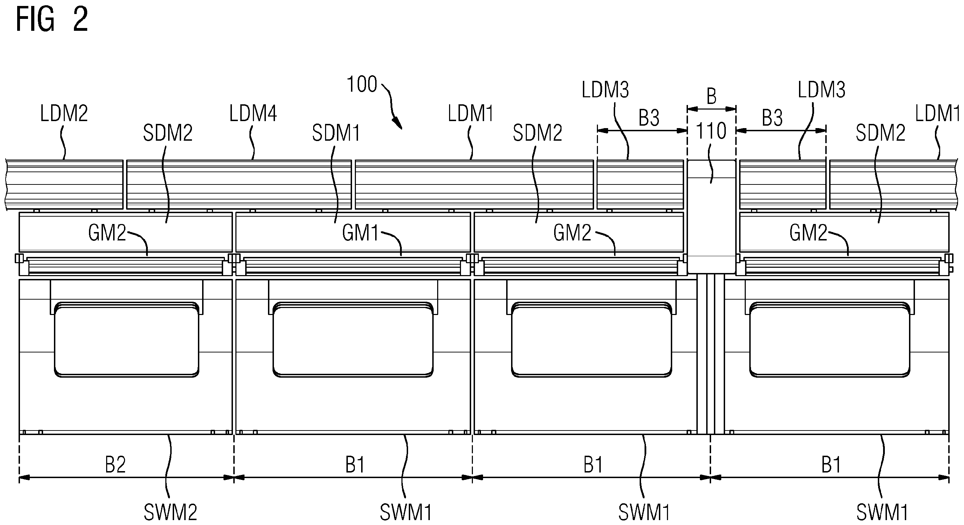

Die Breitendifferenz zwischen der ersten Breite B1 und der zweiten Breite B2 entspricht der halben Breite zumindest eines im Fahrzeug montierten Raumtrennermoduls; ein Ausführungsbeispiel für ein solches Raumtrennermodul wird weiter unten im Zusammenhang mit den Figuren 2, 4 und 5 näher gezeigt und erläutert. Es gilt also:

$$B2 = B1 - B/2,$$

wobei B1 die erste Breite, B2 die zweite Breite und B die Breite des Raumtrennermoduls bezeichnet.

Das Set 10 umfasst darüber hinaus Lochdeckenmodule LDM1, LDM2, LDM3 und LDM4.

Die Lochdeckenmodule LDM1 und LDM2 weisen die erste Breite B1 bzw. die zweite Breite B2 auf.

Die Lochdeckenmodule LDM3 weisen eine dritte Breite B3 auf, die der Hälfte der Differenz zwischen der ersten Breite B1 und der Breite B des Raumtrennermoduls entspricht. Es gilt also:

$$B3 = (B1 - B)/2.$$

Die Lochdeckenmodule LDM4 weisen eine vierte Breite B4 auf, die der ersten Breite B1 abzüglich der Hälfte der Differenz zwischen der ersten und zweiten Breite B1 bzw. B2 entspricht. Es gilt somit:

$$B4 = B1 - (B1-B2)/2 = (B1+B2)/2.$$

Die Figur 2 zeigt beispielhaft einen Abschnitt eines Schienenfahrzeugs 100, das mit Verkleidungsmodulen aus dem Set 10 gemäß Figur 1 verkleidet ist. Die Figur 2 zeigt dabei einen Blick von dem Fahrzeuginnenraum aus - in Fahrzeugquerrichtung - auf die Seitenwand des Schienenfahrzeugs 100.

Die Anordnung der Lochdeckenmodule LDM1 bis LDM4 ist jeweils mittig versetzt zu den darunter befindlichen Seitenwandmodulen, und zwar derart mittig, dass die linken und rechten Ränder der Lochdeckenmodule jeweils über der Mitte der darunter befindlichen Seitenwandmodule liegen.

Die Figur 2 zeigt außerdem, dass vor der Schnittstelle zwischen zwei unmittelbar benachbarten Seitenwandmodulen, die die erste Breite B1 aufweisen, ein Raumtrennermodul 110 angeordnet sein kann. Das Raumtrennermodul 110 weist eine Raumtrennermodulbreite B auf.

Ist ein solches Raumtrennermodul 110 vorhanden, so weisen die Gepäckablagemodule GM2 und Seitendeckenmodule SDM2 dort vorzugsweise jeweils die zweite Breite B2 auf. Durch diese Breitenwahl wird gewährleistet, dass die Gepäckablagemodule und die Seitendeckenmodule mit ihren vom Raumtrennmodul 110 entfernten äußeren Rändern jeweils über den äußeren, vom Raumtrennmodul 110 entfernten Rändern der darunter befindlichen Seitenwandmodule fluchten, ohne dass es hierzu einer manuellen Nachbearbeitung der Module bedarf.

Bezüglich der Lochdeckenmodule lässt sich in der Figur 2 erkennen, dass solche Lochdeckenmodule, die durch ein Raumtrennermodul 110 voneinander getrennt sind, die dritte Breite B3 aufweisen. Die dritte Breite B3 der Lochdeckenmodule gewährleistet, dass die Lochdeckenmodule mit ihren äußeren, vom Raumtrennermodul 110 entfernten Rändern mittig über den darunter befindlichen Seitenwandmodulen angeordnet sind, ohne dass es hierfür einer manuellen Nachbearbeitung der Module bedarf.

Die Figur 2 lässt darüber hinaus erkennen, dass in Fahrzeugabschnitten, in denen kein Raumtrennermodul vorhanden ist, die Gepäckablagemodule sowie die Seitendeckenmodule jeweils die gleiche Breite wie die darunter befindlichen Seitenwandmodule aufweisen und mit diesen bezüglich ihrer jeweils linken und rechten Ränder fluchten.

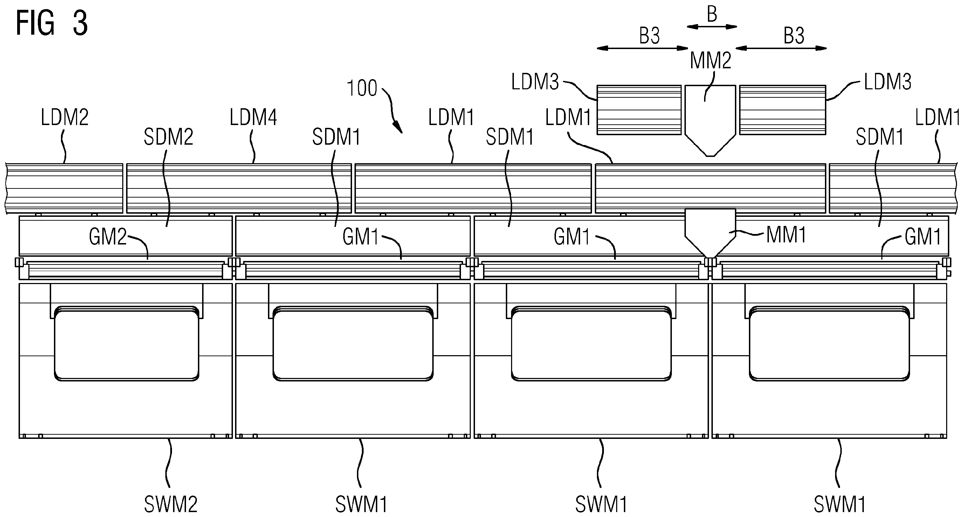

Die Figur 3 zeigt beispielhaft, dass vor der Schnittstelle zwischen zwei benachbarten Seitendeckenmodulen ein Monitormodul MM1 angeordnet sein kann. Wird ein solches Monitormodul vor die Schnittstelle gesetzt, so kann die Breite der Seitendeckenmodule und Lochdeckenmodule dort unverändert bleiben.

Alternativ ist es möglich, ein Monitormodul, wie beispielsweise das Monitormodul MM2 gemäß Figur 3, zwischen zwei benachbarten Lochdeckenmodulen LDM3 zu integrieren. Im Falle einer solchen räumlichen Integration weisen die Lochdeckenmodule vorzugsweise die dritte Breite B3 auf, um zu gewährleisten, dass die äußeren bzw. vom Monitormodul MM2 entfernten Ränder jeweils über der Mitte der darunter befindlichen Seitenwandmodule angeordnet sind, wie dies oben im Zusammenhang mit der Figur 2 bereits erläutert worden ist, ohne dass es hiefür einer manuellen Nachbearbeitung der Module bedarf.

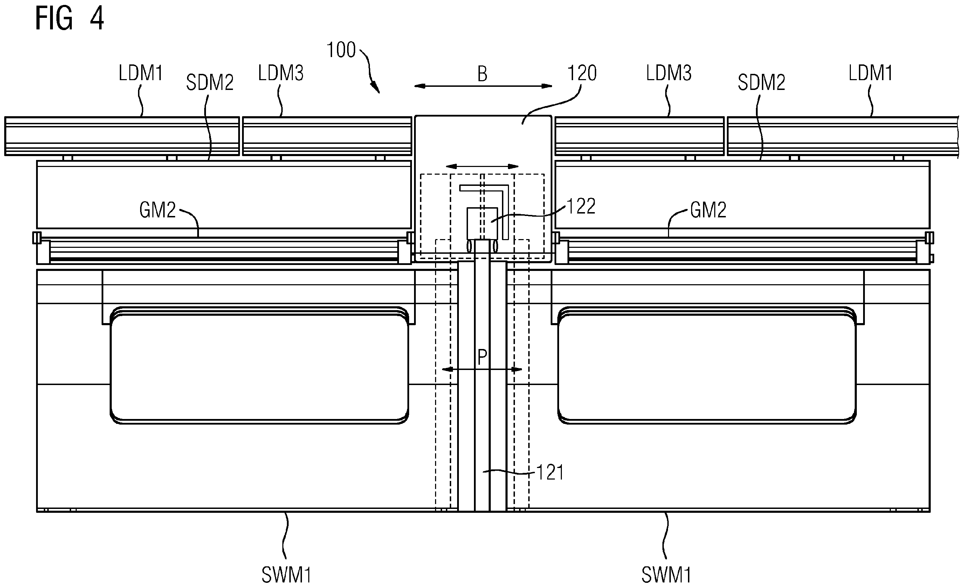

Die Figur 4 zeigt ein Ausführungsbeispiel für ein Innentürmodul 120, das als Raumtrennermodul 110 gemäß Figur 2 eingesetzt werden kann. Das Innentürmodul 120 umfasst eine Innentür 121, die von einer Türhalteeinrichtung 122 gehalten wird.

Die Figur 4 lässt erkennen, dass die Breite B des Innentürmoduls 120 deutlich größer als die Breite der Innentür 121 ist. Die Türhalteeinrichtung 122 ist derart ausgestaltet, dass im Rahmen der Innentürmontage ein Verschieben der Innentür 121 entlang der Pfeilrichtung P bzw. in Fahrzeuglängsrichtung innerhalb des Innentürmoduls 120 möglich ist, ohne dass dies ein Verschieben des gesamten Innentürmoduls 120 innerhalb des Fahrzeugs erforderlich macht. Mit anderen Worten ist also möglich, das Innentürmodul 120 zunächst gemeinsam mit den übrigen Verkleidungsmodulen zu installieren und erst nachträglich die Position der Innentür 121 innerhalb des Innentürmoduls 120 endgültig festzulegen.

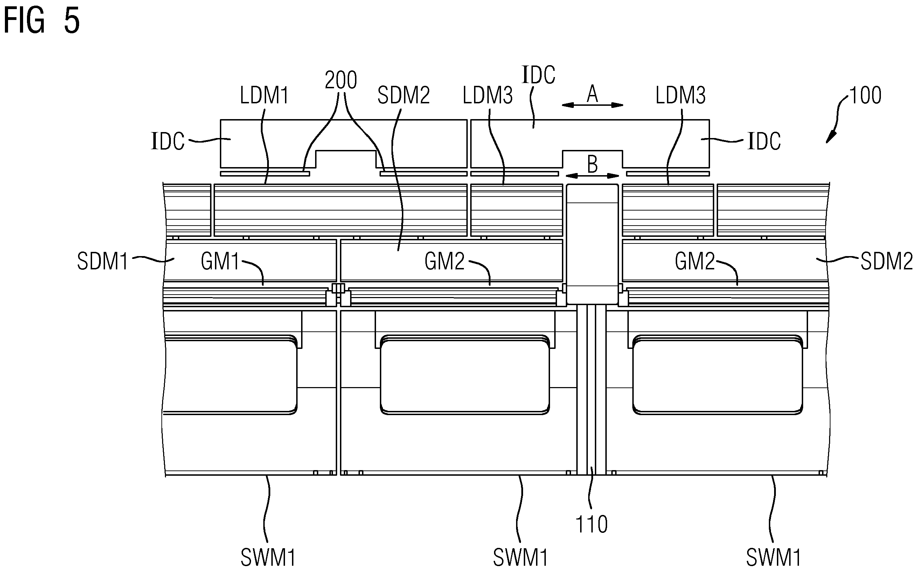

Die Figur 5 zeigt ein Ausführungsbeispiel für ein Schienenfahrzeug 100, bei dem zusätzlich Innendeckencontainer IDC vorhanden sind. Die Innendeckencontainer IDC weisen jeweils zwei Klappen 200 auf, die einen Abstand A voneinander haben. Der Abstand A ist mindestens so groß wie die Breite B der Raumtrennermodule 110 gemäß Figur 2 bzw. der Innentürmodule 120 gemäß Figur 4, um zu ermöglichen, dass sich die Klappen 200 öffnen und schließen lassen, und zwar unabhängig davon, ob ein Raumtrennermodul 110 oder ein Innentürmodul 120 darunter installiert ist oder nicht.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die Ansprüche definiert wird.

**Patentansprüche**

1. Fahrzeug, insbesondere Schienenfahrzeug (100), mit Verkleidungsmodulen, mit denen eine rohbauseitige Fahrzeugseitenwand und Fahrzeugdecke verkleidet sind,
   **dadurch gekennzeichnet, dass**

   - die Verkleidungsmodule sowohl Seitenwandmodule (SWM1, SWM2) als auch Gepäckablagemodule (GM1, GM2) und/oder Seitendeckenmodule (SDM1, SDM2) umfassen, wobei über den Seitenwandmodulen (SWM1, SWM2) jeweils ein Gepäckablagemodul (GM1, GM2) und/oder ein Seitendeckenmodul (SDM1, SDM2) montiert ist,
   - die Seitenwandmodule (SWM1, SWM2), Gepäckablagemodule (GM1, GM2) und Seitendeckenmodule (SDM1, SDM2) jeweils teilweise eine erste Breite (B1) und teilweise eine zweite Breite (B2), die kleiner als die erste Breite (B1) ist, aufweisen,
   - wobei die Breitendifferenz zwischen der ersten und zweiten Breite (B2) der halben Breite zumindest eines im Fahrzeug montierten Raumtrennermoduls (110) entspricht, das zwischen zwei der Gepäckablagemodule (GM1, GM2) und/oder Seitendeckenmodule (SDM1, SDM2) der zweiten Breite (B2) montiert ist und an der Schnittstelle zwischen zwei unmittelbar aneinander angrenzenden Seitenwandmodulen (SWM1, SWM2) der ersten Breite (B1) angeordnet ist, insbesondere in Fahrzeugquerrichtung gesehen vor die Schnittstelle gesetzt ist und diese verdeckt.

2. Fahrzeug nach Anspruch 1,
   **dadurch gekennzeichnet, dass**
   die überwiegende Anzahl der Raumtrennermodule (110), vorzugsweise alle Raumtrennermodule (110), dieselbe Breite (B), nachfolgend Raumtrennermodulbreite genannt, aufweisen.

3. Fahrzeug nach Anspruch 1 oder 2,
   **dadurch gekennzeichnet, dass**

   - in raumtrennermodulfreien Abschnitten des Fahrzeugs die Breite der Gepäckablagemodule (GM1, GM2) und/oder der Seitendeckenmodule (SDM1, SDM2) jeweils der Breite des darunter befindlichen Seitenwandmoduls (SWM1, SWM2) entspricht und
   - dort jeweils die linken und rechten Ränder der Gepäckablagemodule (GM1, GM2) und/oder Seitendeckenmodule (SDM1, SDM2) mit den linken und rechten Rändern der darunter befindlichen Seitenwandmodule (SWM1, SWM2) fluchten.

4. Fahrzeug nach einem der voranstehenden Ansprüche,
   **dadurch gekennzeichnet, dass**
   die Fahrzeugdecke - ausschließlich oder zumindest überwiegend

   - mit solchen Deckenmodulen, insbesondere Lochdeckenmodulen (LDM1-LDM4) verkleidet ist, deren Modulbreite einer der folgenden Breiten entspricht:

- der oben genannten ersten Breite (B1),
- der oben genannten zweiten Breite (B2),
- einer dritten Breite (B3), die der Hälfte der Differenz zwischen der ersten Breite (B1) und der Raumtrennermodulbreite (B) entspricht, oder
- einer vierten Breite (B4), die der ersten Breite (B1) abzüglich der Hälfte der Differenz zwischen der ersten und zweiten Breite (B2) entspricht.

5. Fahrzeug nach Anspruch 4,
   **dadurch gekennzeichnet, dass**

   - alle Deckenmodule mit der ersten Breite (B1) oder zumindest die überwiegende Anzahl an Deckenmodulen mit der ersten Breite (B1) mittig über der Schnittstelle zwischen zwei benachbarten, die ersten Breite (B1) aufweisenden Seitenwandmodulen (SWM1) angeordnet sind,
   - alle Deckenmodule mit der zweiten Breite (B2) oder zumindest die überwiegende Anzahl an Deckenmodulen mit der zweiten Breite (B2) mittig über der Schnittstelle zwischen zwei benachbarten, die zweite Breite (B2) aufweisenden Seitenwandmodulen (SWM2) angeordnet sind,
   - alle Deckenmodule mit der dritten Breite (B3) oder zumindest die überwiegende Anzahl an Deckenmodulen mit der dritten Breite (B3) jeweils paarweise angeordnet sind, wobei jedes Paar jeweils ein Raumtrennermodul (110) oder ein Monitormodul (MM2) zwischen sich einschließt und jedes Paar mittig über der Schnittstelle zwischen zwei benachbarten, die ersten Breite (B1) aufweisenden Seitenwandmodulen (SWM1) angeordnet ist, und
   - alle Deckenmodule mit der vierten Breite (B4) oder zumindest die überwiegende Anzahl an Deckenmodulen mit der vierten Breite (B4) mittig über der Schnittstelle zwischen einem die erste Breite (B1) aufweisenden Seitenwandmodul (SWM1) und einem benachbarten, die zweite Breite (B2) aufweisenden Seitenwandmodul (SWM2) angeordnet sind.

6. Fahrzeug nach Anspruch 5,
   **dadurch gekennzeichnet, dass**
   die Raumtrennermodule (110), die Monitormodule (MM1, MM2) und/oder die Deckenmodule an einem sich in Längsrichtung durch das Fahrzeug hindurcherstreckenden, im Dachbereich montierten oder im Dachbereich integrierten Deckengerüst montiert sind, insbesondere daran angehängt sind.

7. Fahrzeug nach einem der voranstehenden Ansprüche,
   **dadurch gekennzeichnet, dass**

   - an einem sich in Längsrichtung durch das Fahrzeug hindurcherstreckenden, im Dachbereich montierten oder im Dachbereich integrierten Deckengerüst Innendeckencontainer (IDC) montiert sind,
   - wobei jeder Innendeckencontainer (IDC) jeweils einem Deckenmodul zugeordnet ist und jeweils an dergleichen Stelle - in Fahrzeuglängsrichtung gesehen - wie das zugeordnete Deckenmodul montiert ist und die Breite der Innendeckencontainer (IDC) jeweils mit der Breite des zugeordneten Deckenmoduls identisch ist.

8. Fahrzeug nach Anspruch 6 oder 7,
   **dadurch gekennzeichnet, dass**
   das Deckengerüst durch ein Profil oder eine Profilstruktur, insbesondere ein Strangpressprofil oder eine Strangpressprofilstruktur, gebildet ist.

9. Fahrzeug nach einem der voranstehenden Ansprüche,
   **dadurch gekennzeichnet, dass**

   - die überwiegende Anzahl an denjenigen Raumtrennermodulen (110), die Innentürmodule (120) sind, oder alle Raumtrennermodule, die Innentürmodule (120) sind - in Fahrzeugquerrichtung gesehen - breiter als die im Modulinneren von einer Türhalteeinrichtung (122) gehaltene Innentür (121) ist und
   - die im Modulinneren angeordnete Türhalteeinrichtung (122) derart ausgestaltet ist, dass im Rahmen der Innentürmontage ein Verschieben der Innentür (121) in Fahrzeuglängsrichtung innerhalb des Innentürmoduls (120) - ohne Verschieben des Innentürmoduls (120) als solches - möglich ist.

10. Fahrzeug nach Anspruch 9,
    **dadurch gekennzeichnet, dass**

die Türhalteeinrichtung (122) an dem im Dachbereich montierten oder im Dachbereich integrierten Deckengerüst montiert ist und die Innentür (121), vorzugsweise einschließlich Türantrieb, in Fahrzeuglängsrichtung an dem Deckengerüst verschiebbar ist.

**11.** Fahrzeug nach einem der voranstehenden Ansprüche,
**dadurch gekennzeichnet, dass**
die überwiegende Anzahl im Sinne der obigen Ansprüche mindestens 50% der jeweiligen Bezugsgröße bzw. Bezugszahl, bevorzugt mindestens 75 % und besonders bevorzugt mindestens 90 % beträgt.

**Claims**

**1.** Vehicle, in particular a rail vehicle (100), having panelling modules with which a vehicle bodyshell side wall and vehicle ceiling are lined,
**characterized in that**

- the panelling modules comprise side wall modules (SWM1, SWM2) and luggage rack modules (GM1, GM2) and/or side roof modules (SDM1, SDM2), wherein in each case a luggage rack module (GM1, GM2) and/or a side roof module (SDM1, SDM2) are fitted over the side wall modules (SWM1, SWM2),
- the side wall modules (SWM1, SWM2), luggage rack modules (GM1, GM2) and side roof modules (SDM1, SDM2) each partially have a first width (B1) and partially a second width (B2), which is smaller than the first width (B1),
- wherein the difference in width between the first and second width (B2) corresponds to half of the width of at least one partition module (110) which is fitted in the vehicle and which is fitted between two of the luggage rack modules (GM1, GM2) and/or side roof modules (SDM1, SDM2) of the second width (B2) and is arranged at the interface between two side wall modules (SWM1, SWM2) of the first width (B1) directly adjoining one another, in particular is placed in front of the interface, viewed in the vehicle transverse direction, and which covers the interface.

**2.** Vehicle according to Claim 1,
**characterized in that**
the majority of the partition modules (110), preferably all partition modules (110), have the same width (B), hereinafter referred to as the partition module width.

**3.** Vehicle according to Claim 1 or 2,
**characterized in that**

- in sections of the vehicle without partition modules, the width of the luggage rack modules (GM1, GM2) and/or the side roof modules (SDM1, SDM2) in each case corresponds to the width of the side wall module (SWM1, SWM2) situated below them, and
- there, the respective left-hand and right-hand edges of the luggage rack modules (GM1, GM2) and/or side roof modules (SDM1, SDM2) align with the left-hand and right-hand edges of the side wall modules (SWM1, SWM2) situated below them.

**4.** Vehicle according to one of the preceding claims,
**characterized in that**
the vehicle ceiling is lined - exclusively or at least predominantly - with such ceiling modules, in particular multivent ceiling modules (LDM1-LDM4), the module width of which corresponds to one of the widths:

- the abovementioned first width (B1),
- the abovementioned second width (B2),
- a third width (B3), which corresponds to half of the difference between the first width (B1) and the partition module width (B), or
- a fourth width (B4), which corresponds to the first width (B1) minus half of the difference between the first and second width (B2).

**5.** Vehicle according to Claim 4,
**characterized in that**

- all ceiling modules of the first width (B1) or at least the majority of ceiling modules of the first width (B1) are arranged centrally over the interface between two adjoining side wall modules (SWM1) having the first width (B1),
- all ceiling modules of the second width (B2) or at least the majority of ceiling modules of the second width (B2) are arranged centrally over the interface between two adjoining side wall modules (SWM2) having the second width (B2),
- all ceiling modules of the third width (B3) or at least the majority of ceiling modules of the third width (B3) are arranged in pairs, wherein each pair encloses a partition module (110) or a monitor module (MM2) between them, and each pair is arranged centrally over the interface between two adjoining side wall modules (SWM1) having the first width (B1), and
- all ceiling modules of the fourth width (B4) or at least the majority of ceiling modules of the fourth width (B4) are arranged centrally over the interface between a side wall module (SWM1) having the first width (B1) and an adjoining side wall module (SWM2) having the second width (B2).

**6.** Vehicle according to Claim 5,
**characterized in that**
the partition modules (110), the monitor modules (MM1, MM2) and/or the ceiling modules are fitted, in particular attached to, a ceiling framework extending through the vehicle in a longitudinal direction and fitted in the roof area or integrated in the roof area.

**7.** Vehicle according to one of the preceding claims,
**characterized in that**

- interior ceiling containers (IDC) are fitted to a ceiling framework, extending through the vehicle in a longitudinal direction and fitted in the roof area or integrated in the roof area,
- wherein each interior ceiling container (IDC) is assigned to a ceiling module and in each case at the same location - viewed in a vehicle longitudinal direction - where the associated ceiling module is fitted and the width of each of the interior ceiling containers (IDC) is identical to the width of the associated ceiling module.

**8.** Vehicle according to Claim 6 or 7,
**characterized in that**
the ceiling framework is formed by a profile or a profile structure, in particular an extruded profile or an extruded profile structure.

**9.** Vehicle according to one of the preceding claims,
**characterized in that**

- the majority of those partition modules (110) which are interior door modules (120), or all partition modules which are interior door modules (120), are wider - viewed in a vehicle transverse direction - than the interior door (121) held inside the module by a door retaining device (122), and
- the door retaining device (122) arranged inside the module is designed in such a way that in fitting the interior door it is possible to displace the interior door (121) in a vehicle longitudinal direction inside the interior door module (120) without displacing the interior door module (120) as such.

**10.** Vehicle according to Claim 9,
**characterized in that**
the door retaining device (122) is fitted to the ceiling framework fitted in the roof area or integrated in the roof area and the interior door (121), preferably including the door drive, is displaceable on the ceiling framework in a vehicle longitudinal direction.

**11.** Vehicle according to one of the preceding claims,
**characterized in that**
the majority as employed in the claims above preferably amount to at least 50% of the respective reference figure or quantity, preferably at least 75% and more preferably at least 90%.

**Revendications**

**1.** Véhicule, notamment véhicule (100) ferroviaire, ayant des modules d'habillage, par lesquels une paroi latérale du véhicule du côté de la caisse et un plafond du véhicule sont habillés,
**caractérisé en ce que**

- les modules d'habillage comprennent tant des modules (SWM1, SWM2) de paroi latérale qu'également des modules (GM1, GM2) de dépôt de bagage et/ou des modules (SDM1, SDM2) de plafond latéral, un module (GM1, GM2) de dépôt de bagage et/ou un module (SDM1, SDM2) de plafond latéral étant montés respectivement par les modules (SWM1, SWM2) de paroi latérale,
- les modules (SWM1, SWM2) de paroi latérale, les modules (GM1, GM2) de dépôt de bagage et les modules (SDM1, SDM2) de plafond latéral ont chacun en partie une première largeur (B1) et en partie une deuxième largeur (B2), qui est plus petite que la première largeur (B1),
- dans lequel la différence de largeur entre la première et la deuxième largeurs (B2) correspond à la demi-largeur d'au moins un module (110) de séparation d'espace monté dans le véhicule, qui est monté entre deux des modules (GM1, GM2) de dépôt de bagage et/ou des modules (SDM1, SDM2) de plafond latéral de la deuxième largeur (B2) et qui est monté à l'interface entre deux modules (SWM1, SWM2) de paroi latérale directement voisins l'un de l'autre de la première largeur (B1) en étant mis, notamment considéré dans la direction transversale du véhicule avant l'interface et la recouvrant.

2. Véhicule suivant la revendication 1,
**caractérisé en ce que**
le nombre prépondérant des modules (110) de séparation d'espace, de préférence tous les modules (110) de séparation d'espace, ont la même largeur (B) dénommé dans ce qui suit largeur de module de séparation d'espace.

3. Véhicule suivant la revendication 1 ou 2,
**caractérisé en ce que**

- dans des parties du véhicule sans module de séparation d'espace, la largeur des modules (GM1, GM2) de dépôt de bagage et/ou des modules (SDM1, SDM2) de plafond latéral correspond respectivement à la largeur du module (SWM1, SWM2) de paroi latérale se trouvant en dessous et
- les bords gauche et droit des modules (GM1, GM2) de dépôt de bagage et/ou des modules (SDM1, SDM2) de plafond latéral sont respectivement alignés avec les bords gauche et droits des modules (SWM1, SWM2) de paroi latéral se trouvant en dessous.

4. Véhicule suivant l'une des revendications précédentes,
**caractérisé en ce que**
le plafond du véhicule

- d'une manière exclusive - ou au moins d'une manière prépondérante - est habillé par des modules de plafond de ce genre, notamment pas des modules (LDM1 à LDM4) de plafond à trou, dont la largeur de module correspond à l'une des largeurs suivantes :
- la première largeur (B1) mentionnée ci-dessus,
- la deuxième largeur (B2) mentionnée ci-dessus,
- une troisième largeur (B3), qui correspond à la moitié de la différence entre la première largeur (B1) et la largeur (B) du module de séparation d'espace, ou
- une quatrième largeur (B4), qui correspond à la première largeur (B1) déduction faite de la moitié de la différence entre la première et la deuxième largeur (B2),

5. Véhicule suivant la revendication 4,
**caractérisé en ce que**

- tous les modules de plafond ayant la première largeur (B1) ou au moins le nombre prépondérant de modules de plafond ayant la première largeur (B1) sont montés au milieu au-dessus de l'interface entre deux modules (SWM1) de paroi latérale voisins ayant la première largeur (B1),
- tous les modules de plafond ayant la deuxième largeur (B2) ou au moins le nombre prépondérant de modules de plafond ayant la deuxième largeur (B2) sont montés au milieu au-dessus de l'interface entre deux modules (SWM2) de paroi latérale voisins ayant la deuxième largeur (B2),
- tous les modules de plafond ayant la troisième largeur (B3) ou au moins le nombre prépondérant de modules de plafond ayant la troisième largeur (B3) sont montés respectivement paire par paire, chaque paire entourant entre elles respectivement un module (110) de séparation d'espace ou un module (MM2) de moniteur et chaque paire étant montée au milieu au-dessus de l'interface entre deux modules (SWM1) de paroi latérale voisins ayant la première largeur (B1), et
- tous les modules de plafond ayant la quatrième largeur (B4) ou au moins le nombre prépondérant de modules de plafond ayant la quatrième largeur (B4) sont montés au milieu au-dessus de l'interface entre un module (SWM1) de paroi latérale ayant la première largeur (B1) et un module (SWM2) de paroi latérale voisin ayant la deuxième largeur (B2).

6. Véhicule suivant la revendication 5,
   **caractérisé en ce que**
   les modules (110) de séparation d'espace, les modules (MM1, MM2) de moniteur et/ou les modules de plafond sont montés, en y étant notamment suspendus, à une ossature de plafond s'étendant dans la direction longitudinale du véhicule montée dans la région du plafond ou intégrée à la région du plafond.

7. Véhicule suivant l'une des revendications précédentes,
   **caractérisé en ce que**

   - des conteneurs (IDC) intérieurs de plafond sont montés sur une ossature de plafond s'étendant dans la direction longitudinale du véhicule montée dans la région du toit ou intégrée à la région du toit,
   - dans lequel chaque conteneur (IDC) intérieur de plafond est associé respectivement à un module de plafond et est monté respectivement au même endroit - considéré dans la direction longitudinale du véhicule - que le module de plafond associé et la largeur du conteneur (IDC) intérieur de plafond est la même respectivement que la largeur du module de plafond associé.

8. Véhicule suivant la revendication 6 ou 7,
   **caractérisé en ce que**
   l'ossature de plafond est formée d'un profilé ou d'une structure profilée, notamment d'un profilé filé à la presse ou d'une structure de profilé filée à la presse.

9. Véhicule suivant l'une des revendications précédentes,
   **caractérisé en ce que**

   - le nombre prépondérant de modules (110) de séparation d'espace, qui sont des modules (120) intérieurs de porte, ou tous les modules de séparation d'espace, qui sont des modules (120) intérieurs de porte sont - considéré dans la direction transversale du véhicule -plus larges que la porte (120) intérieure maintenue à l'intérieur du module par un dispositif (122) de maintien de porte et
   - le dispositif (122) de maintien de porte disposé à l'intérieur du module est conformé de manière à ce que soit possible, dans le cadre du montage de la porte intérieure, un coulissement de la porte (121) intérieure dans la direction longitudinale du véhicule à l'intérieur du module (120) intérieur de porte - sans coulissement du module (120) intérieur de porte en tant que tel -.

10. Véhicule suivant la revendication 9,
    **caractérisé en ce que**
    le dispositif (122) de maintien de porte est monté sur l'ossature de plafond montée dans la région du plafond ou intégrée à la région du plafond et la porte (121) intérieure, y compris de préférence l'entraînement de la porte, peut coulisser sur l'ossature de plafond dans la direction longitudinale du véhicule.

11. Véhicule suivant l'une des revendications précédentes,
    **caractérisé en ce que**
    le nombre prépondérant au sens des revendications ci-dessus est d'au moins 50% de la grandeur de référence ou du nombre de référence respectif, de préférence d'au moins 75% et, d'une manière particulièrement préférée, d'au moins 90%.

FIG 1

FIG 2

FIG 3

EP 3 408 155 B1

FIG 4

EP 3 408 155 B1

**FIG 5**

**IN DER BESCHREIBUNG AUFGEFÜHRTE DOKUMENTE**

**In der Beschreibung aufgeführte Patentdokumente**

- US 4283086 A